# EUROPEAN PATENT SPECIFICATION

(11) **EP 2 607 130 B1**
(45) Date of publication and mention of the grant of the patent: **08.10.2014**
(21) Application number: 12198452.0
(22) Date of filing: 20.12.2012
(51) Int. Cl.: B60K 11/00

(54) **Vehicle with air vent arrangement**
Fahrzeug mit Entlüftungsanordnung
Véhicule avec agencement de ventilation d'air

(30) Priority: 22.12.2011 GB 201122090
(43) Date of publication of application: 26.06.2013
(73) Proprietor: Nissan Motor Manufacturing (UK) Ltd., Cranfield Bedfordshire MK43 0DB (GB)
(72) Inventor: Kenion, Troy, Cranfield, Bedfordshire MK430DB (GB)

(56) References cited:
- EP-A1- 0 982 168
- EP-A1- 1 637 710
- DE-A1-102008 045 596
- SU-A1- 1 196 331

## Description

### Field of the invention

The present invention lies in the field of automotive technology and in particular in the field of automotive engine cooling. More specifically, but not exclusively, the invention relates to a vehicle comprising a mid- or rear-mounted engine and an air vent arrangement.

### Background to the invention

Overheating of engines is extremely undesirable as it can seriously affect engine performance, and in certain circumstances overheating can lead to damage or even destruction of a vehicle's engine and/or other components of a vehicle located in close proximity to the engine.

In order to prevent overheating it is known to provide an engine cooling system. Commonly, such engine cooling systems provide an air flow from an air inlet, over an engine, and out through one or more air outlets. The air flow therefore transfers the heat produced by the engine away from the vehicle.

The space in the engine bay of vehicles having mid- or rear-mounted engines can be limited. Due to this limited space, mid- and rear- mounted engine bays can get particularly hot.

This problem is exacerbated in high-performance vehicles such as sports cars and in hybrid vehicles. In particular, high performance vehicles generally have smaller form factors to improve aerodynamic performance, and also produce even more heat compared to normal vehicles. Engine bays of hybrid vehicles have less space because such vehicles must accommodate battery cells in addition to two separate motors. Hence, in these types of vehicles even more efficient, or greater amounts of, cooling is required.

In order to provide sufficient cooling performance in high performance vehicles, and hybrid vehicles, it is therefore generally necessary to provide larger air outlets than required for other vehicles to allow the large volume of hot air to escape from the vehicle. While air cooling is the preferred means for cooling of engines, the requirement for having air outlets provides openings through which rain water can enter the vehicle. As discussed above, the greater the heat produced by the engine, the larger the air outlet required. Consequently, there is a risk of even more water entering a vehicle having a mid- or rear-mounted engine because such vehicles generally require larger air outlets. An known example of air vent arrangement with water collection can be found in SU1196331,which discusses an arrangement for an outlet vent for an tractor vehicle.

The problem of water ingress is yet further exacerbated in vehicles having mid- or rear-mounted engines because the flow of air is from the front of the vehicle to the rear of the vehicle, and consequently the air outlet from the engine has to be at the rear of the vehicle. For aerodynamic reasons such vehicles generally slope towards their rear. Hence, in vehicles having a mid- or rear-mounted engine there is a problem that rain water runs down the vehicle slope towards the air outlet, and consequently even larger volumes of water can enter the vehicle compared to a vehicle having a front-mounted engine. This problem is yet further exacerbated when a vehicle is static, for example, stopped at traffic lights or parked.

It is an aim of embodiments of the invention to at least partly mitigate some of the aforementioned problems.

### Summary of Invention

In accordance with a first aspect of the invention there is provided a cooling system for an engine bay of vehicle having a mid- or rear-mounted engine, the cooling system comprising an air inlet vent arranged to receive, in use, a flow of air heated by the engine; an air outlet vent arranged to provide, in use, an outlet for the flow of air heated by the engine, characterised in that the air outlet vent is arranged to be positioned further forwards, and higher, in the vehicle than the air inlet vent so that, in use, air flow from the air inlet vent to the air outlet vent is from a relatively rearward part of the vehicle to a relatively forward part of the vehicle, and a water collection arrangement arranged, in part, below the air outlet vent for collection of water entering the vehicle through the air outlet vent, wherein the water collection arrangement is fitted within the engine bay of the vehicle, and wherein the air inlet vents are formed in the water collection arrangement.

It is one benefit of the invention that the arrangement of the air inlet vent and the air outlet vent so that the outlet vent is forwards of and higher than the air inlet vent means that the heat of the air flow through and over the engine assists in carrying the air upwards and in the opposite direction to the general airflow and vehicle movement, in a rearward to forward direction. By virtue of the water collection arrangement, the invention also provides the further advantage that any water that enters the air outlet is collected within the water collection arrangement, and can therefore be drained through drainage outlets that are preferably provided in the water collection arrangement.

In a preferred embodiment, the air outlet vent forms an integral part of a body of the vehicle. Preferably, for example, the air outlet vent is arranged on or proximate to a roof of the vehicle.

A plurality of air inlet vents and/or a plurality of air outlet vents may be provided.

For example, the vehicle may include an upper air inlet and a lower air inlet, the lower air inlet being arranged in a lower, and relatively rearward, position within the vehicle compared with the upper air inlet.

The water collection arrangement may include a water collection channel, a portion of the water collection channel being arranged below the air outlet vent for collecting water that has entered the air outlet assembly through the air outlet vent.

The assembly allows the free flow of air up through the engine bay and out of the vehicle, while any water ingress is channelled and caught by the water collection arrangement.

The water collection arrangement preferably includes a tray to define the water collection channel.

The air inlet vent may be formed by an aperture within the tray.

In one preferred embodiment, a periphery of the aperture is provided with a lipped edge. The lipped edge provides the advantage that water is prevented from entering the air inlet vent from the water collection channel.

The water collection channel may further comprise at least one drainage outlet for water, wherein the water collection channel is arranged to provide a flow path for water from the portion of the water collection channel below the air outlet vent to the outlet for water. Preferably, the water collection channel is sloped generally downwards from the portion of the channel arranged below the air outlet vent towards the drainage outlet.

The water collection channel may include a plurality of water flow paths between the air outlet vent and the drainage outlet.

The plurality of water flow paths may include left- and right-side flow water flow paths that run down side portions of the water collection arrangement.

Preferably, the water collection arrangement includes an access opening for access to a reservoir, such as a fuel tank of the vehicle.

It may be beneficial to provide the periphery of the access opening with a lipped edge to prevent water within the water collection arrangement from entering the access opening.

The air outlet vent may be provided with a cover means, for example a mesh, which is arranged to restrict the entry of solid material or debris into the engine bay, while allowing air to leave the outlet.

According to a second aspect of the invention there is provided an air vent arrangement for use in a vehicle, the air vent arrangement comprising an air inlet vent arranged to receive, in use, a flow of air heated by the engine; and a water collection arrangement arranged, in part, below an air outlet vent of the vehicle for collection of water entering the vehicle through the air outlet vent. The air outlet vent preferably forms an integral part of the vehicle and is arranged to provide, in use, an outlet for the flow of air heated by the engine, the air outlet vent being arranged to be positioned further forwards and higher in the vehicle than the air inlet vent so that, in use, air flow from the air inlet vent to the air outlet vent is from a relatively rearward part of the vehicle to a relatively forward part of the vehicle.

### Brief description of the drawings

Embodiments of the present invention will now be described, by way of example only, with reference to the accompanying drawings, in which like reference numerals are used for like parts, and in which:
Figure 1 is a side view of a vehicle in accordance with an embodiment of the invention;
Figure 2 is perspective view of the external surface of a rear-end of the vehicle shown in Figure 1;
Figure 3 is a perspective view of the rear-end of the vehicle shown in Figure 2 with a portion of the shell of the vehicle cut-away to show an air outlet assembly;
Figure 4 is a perspective view of a tray of the air outlet assembly shown in Figure 3;
Figure 5 is a perspective view of an auxiliary fuel tank access point formed in the tray shown in Figures 3 and 4; and
Figure 6 is a perspective view of a lower right engine vent provided in the tray shown in Figure 4.

### Detailed description of embodiments of the invention

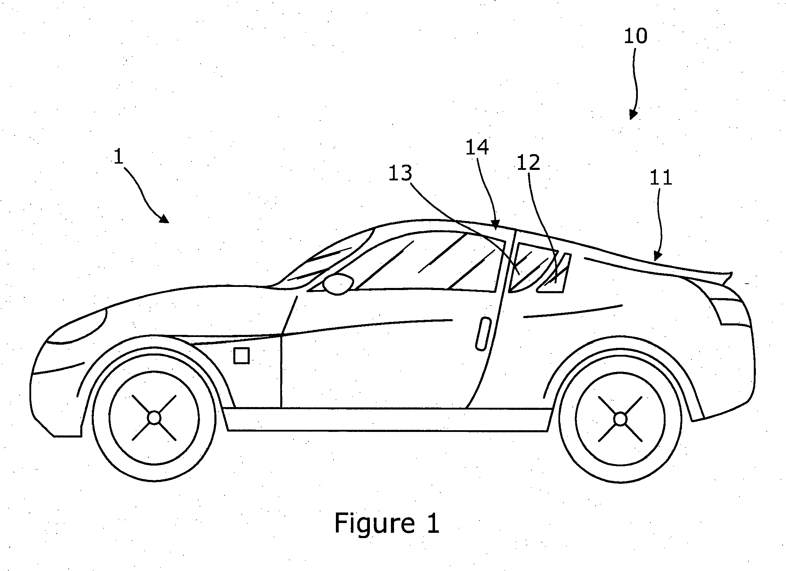

A first embodiment of the invention shall now be described with reference to Figures 1 to 6.

An engine (not shown) is mounted in a rear portion of a vehicle 1 below the rear body 11 of the vehicle 1. The engine produces heat when operating and as such an engine cooling system is provided to help prevent overheating of the engine.

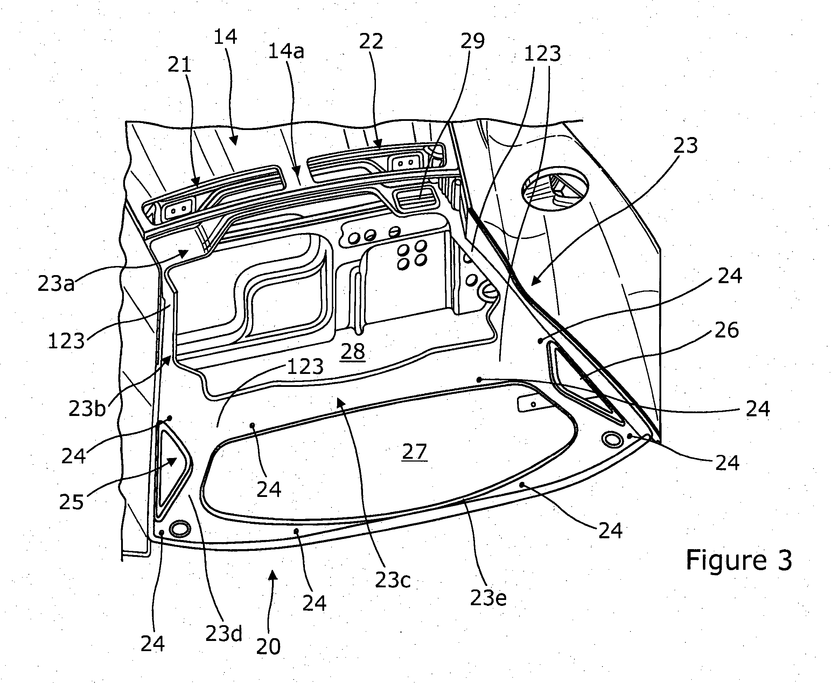

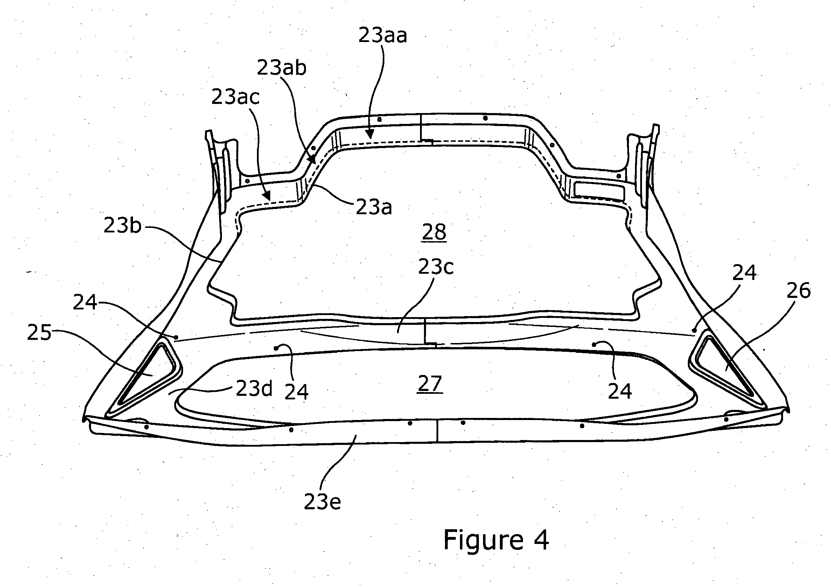

The engine cooling system includes two air inlets 12 which are integral with the vehicle body, one being arranged on either side of the vehicle 1 just to the rear of a respective left- or right-side rear quarter glass 13. One of the air inlets 12 can be seen in Figure 1. Each air inlet 12 protrudes laterally from the side of its respective rear quarter glass 13 so that, when the vehicle 1 is moving forwards, air enters the air cooling system of the vehicle 1 through the air inlets 12 due to the forward movement of the vehicle 1. Since the air inlets 12 are positioned forwards or upstream of the engine, when the vehicle 1 is moving forwards the air that has entered the vehicle 1 through the inlets 12 then flows into an engine bay in the rear of the vehicle 1, below the engine bay cover or rear body 11. A heat transfer device such as a radiator (not shown) is attached to the engine within the engine bay for transferring heat away from the engine. Hence, the air flows through the engine bay across the radiator, or across the radiator and the engine. The heat produced by the engine is then transferred to the air flowing through the air cooling system. The heated air can then exit the vehicle 1 through an air outlet assembly 20, which is shown in Figures 3 and 4, and shall now be described in detail.

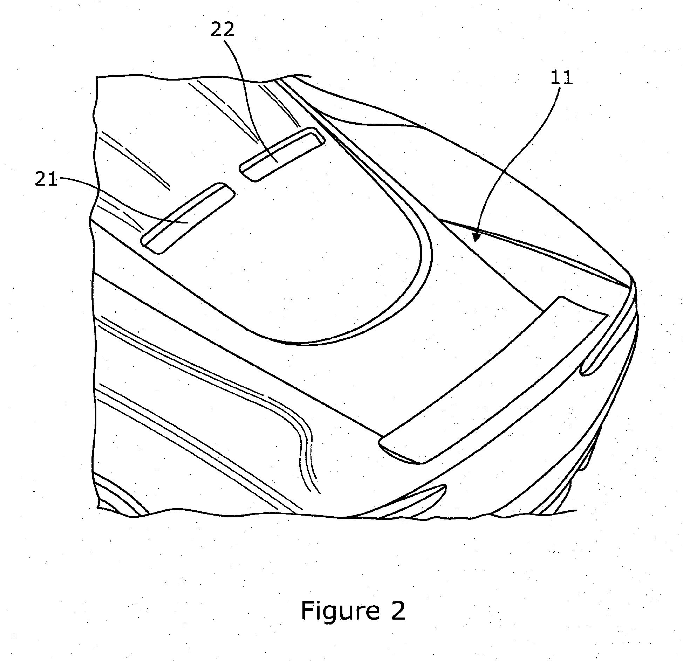

As shown in Figures 2, 3 and 4, the air outlet assembly 20 comprises outlet vents 21, 22 through which air leaves the vehicle 1. The outlet vents 21, 22 are arranged near an upper end of the rear body of the vehicle 1, proximate to the vehicle's roof 14. Typically, for example, the outlet vents 21, 22 are arranged on a rearward and downward-sloping portion of the rear end of the vehicle, as shown in Figure 2.

Each outlet vent 21, 22 slopes downwardly from the front of the vehicle towards the rear. The outlet vents 21, 22 are arranged in this position and at this angle in order to minimise the amount of water that can run down the vehicle body and into the outlet vents. The outlet vents 21, 22 are at a relatively high point on the vehicle body so that the heated air rises up to and out of the outlet vents 21, 22. This prevents a pocket of hot air forming in an upper portion of the engine bay.

The outlet vents 21, 22 are elongate openings or slits arranged laterally across the vehicle 1. In this embodiment of the invention two outlet vents 21, 22 are provided with a structural support 14a of the roof 14 arranged between the two vents 21, 22; a left vent 21 and a right vent 22 when looking at the vehicle 1 from the rear, The outlet vents 21, 22 are arranged longitudinally in line across the width of the vehicle 1. However, it will be appreciated that in alternative embodiments of the invention only a single outlet vent or even three of more outlet vents may be provided.

The outlet vents 21, 22 are covered with a mesh to prevent debris entering the vents 21, 22 and dropping into the engine bay. Any other suitable covering to prevent the entry of unwanted debris could be provided.

Unfortunately, the outlet vents 21, 22, like other air outlet vents, are susceptible to the ingress of water, in particular rain water. In accordance with the present invention, a water collection arrangement in the form of a tray, referred to generally as 23, is therefore provided to collect water that enters the vehicle 1 through the outlet vents 21, 22. The tray 23 carries water via water collection channels 123 to drainage holes or outlets 24 provided in lower portions of the tray 23.

The tray 23 for collecting water shall now be described in further detail with reference to Figures 3 to 6.

The tray 23 is arranged underneath the outlet vents 21, 22 in order to collect rain water that passes through the outlet vents 21, 22 from the outside of the vehicle. The tray 23 is slightly wider than the outlet vents 21, 22 in order to aid the collection of water that passes through the outlet vents 21, 22.

The tray 23 is arranged directly below and generally parallel to the rear body 11 of the vehicle 1, and slopes downwardly from the front towards the rear. The tray 23 also has an outer shape that is substantially the same as the shape of the internal surface of the rear body 11 of the vehicle 1. The tray 23 is provided with a water collection channel 123 comprising several water flow path sections within the tray. Left- and right-side water flow channels run down either side of the tray, each side channel carrying water that enters through a respective one of the outlet vents 21, 22 to a lowermost portion of the tray 23.

The tray 23 is provided with a plurality of engine vents (air inlet vents) 25, 26, 27, and 28, which act as an outlet for air from the engine bay, and therefore define inlets to the air outlet assembly 20.

Lower left- and right-side engine vents 25, 26 take the form of triangular-shaped holes in the tray 23 arranged at each of the bottom left and bottom right rear corners of the tray 23. A lower middle air vent 27 extends across a lower region of the tray 23 between the lower left and right air vents 21, 22. An upper engine vent 28 extends from a middle portion of the air outlet assembly 20 up towards an uppermost portion of the air outlet assembly 20, and substantially across the width of the air outlet assembly 20. Hence, the upper engine vent 28 presents a larger inlet flow area to air than the other engine vents 25, 26, 27.

The provision of the openings in the tray 23 to define the upper and lower vents 28, 27 defines internal surfaces of the tray 23 which, together with the outer side surfaces of the tray 23, define the water flow channels 123 down either side of the tray. The outer side surfaces of the tray 23 extend higher than the internal side surfaces. The internal side surfaces are provided with a lip along the upper edge for preventing water flowing over the edge of the channel. The outer side surfaces of the tray 23 abut the lower surface of the rear body 11 of the vehicle 1, which effectively defines an upper surface of the air outlet assembly 20.

In use, the movement of the air from the front to the rear of the vehicle results in the air being forced to the rear of the vehicle. The air is heated by the engine in the engine bay. The heat of the air then carries the air up through the lower left engine vent 25, the lower right engine vent 26, and the lower middle engine vent 27 into the air outlet assembly 20. The air that passes up through the lower left, lower right and lower middle engine vents 25, 26, 27 then rises up along the under side of the rear body 11 of the vehicle 1, which is angled downwards from front to back. Hence, the heat of the air carries the air in the opposite direction to the movement of the vehicle, and to the general movement of the air flow through the engine bay i.e. from a relatively rearward portion of the vehicle to a relatively forward portion of the vehicle.

The upper engine vent 28, which is larger than the other engine vents, is provided to allow air that has risen to an upper portion of the engine bay to escape out through the air outlet assembly 20. The upper engine vent 28 therefore helps to prevent a pocket of hot air forming in the upper portion of the engine bay.

The upper engine vent 28 also allows for access to the engine for maintenance and repair. The upper engine vent 28 can be accessed by lifting up the rear body 11 of the vehicle, which is connected to the main body of the vehicle by a hinge at the upper end of the rear body 11 of the vehicle. It will be appreciated that the engine could also be accessed through any of the other engine vents 25, 26, 27. However, the upper engine vent 28 is a preferable access point due to its larger size.

Once the hot air reaches the uppermost portion of the air outlet assembly 20 it is able to leave the vehicle through the outlet vents 21, 22. A vertical gap exists between the tray 23 and the outlet vents 21, 22 to allow the air to pass therebetween, over the tray 23 and up through the outlet vents 21,22.

The arrangement of the channel defined by the tray 23 shall now be discussed in detail, with particular reference to the flow of water through the channel.

The tray 23 has an uppermost portion 23a located immediately below the outlet vents 21, 22 for the collection of water that enters through the outlet vents 21, 22. The uppermost portion 23a slopes from a central region, proximate to the structural support 14a, laterally towards left and right side portions of the tray 23 which abut the rear body 11 of the vehicle. Each side of the uppermost portion 23a has three distinct regions, which are seen most clearly in Figure 4: an innermost region 23aa proximate to the structural support 14a; a central region 23ab adjacent to the innermost region 23aa and an outer region 23ac adjacent to the central region 23ab and proximate to the rear body 11 of the vehicle 1. All three regions 23ab, 23aa and 23cc are sloping generally downwards, with the central region 23ab being sloped at a greater gradient compared to the innermost region 23aa and the outermost region 23ac.

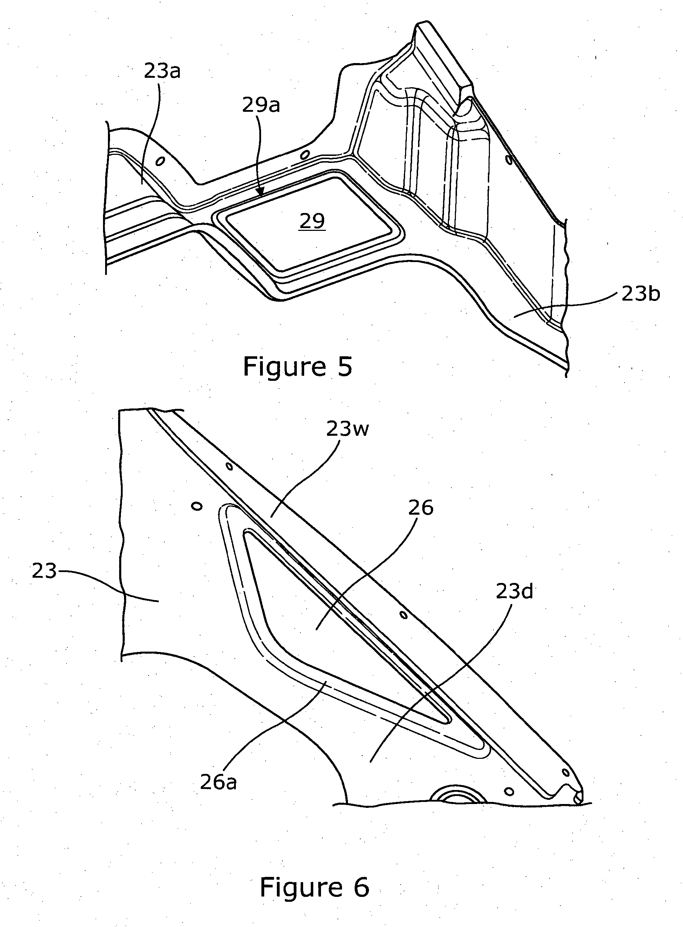

As shown in Figure 5, the uppermost portion 23a of the tray includes an auxiliary fuel tank access point or opening 29, which is formed in the right-side outer region 23ac of the tray 23. The auxiliary fuel tank access opening 29 is provided to allow access through the rear body 11 of the vehicle and the tray 23 to the fuel reservoir for refilling purposes. The auxiliary fuel tank access opening 29 has a periphery provided with a lipped edge 29a to prevent water that runs down the uppermost portion 23a of the tray 23 from entering the auxiliary fuel tank access opening 29.

Left- and right-side upper side portions 23b of the tray 23 extend from the uppermost portion 23a down each of the left and right sides of the tray 23, respectively, from the front of the vehicle towards the rear and in a generally downwards sloping direction, so that water that has entered the vehicle 1 through the air outlet vents 23, and which is collected in the uppermost portions 23a of the tray, runs down the upper side portions 23b.

The upper side portions 23b of the tray 23 are joined at their lowermost ends by a cross-bar portion 23c which extends laterally across the middle of the rear of the vehicle 1. The cross-bar portion 23c acts as a supporting strut across the rear of the vehicle, and also allows for water to flow between the left and right sides of the tray 23 by virtue of a water flow channel. The upper engine vent 28 is defined between the uppermost portions 23a, the upper side portions 23b and the cross-bar portion 23c of the tray 23.

Lower side portions 23d of the tray extend from the middle portion 23c down each side of the tray 23 from the front of the vehicle towards the rear and in a generally sloping downwards direction, and define further water flow paths to allow water that has reached the lower region of the water flow paths of the upper side portions 23b to progress further downwards through the tray 23, if it has not already drained through one of the drainage outlets 24. The lower left- and right-side engine vents 25, 26 are defined in the outermost sides of the lower side portions 23d of the tray 23, as can be seen in Figure 6.

The lower side portions 23d of the tray extend to a bottom portion 23e of the tray, which runs laterally along a rear edge of the vehicle body 11. The lower side portions 23d, along with the middle portion 23c and the bottom portion 23e, define the lower middle engine vent 27.

The drainage holes 24 are provided in various locations across the base of the tray 23 within the water collection channels. For example, drainage holes are provided on the upper side portions 23b above the lower left and right engine vents 25, 26 near the edge of the tray 23; near a lower edge of the middle portion 23c of the tray 23; and along the lower edge of the bottom portion 23e of the base of the tray 23. Each of the drainage holes is connected to a drainage duct, such a flexible pipe, which then carries any water that enters the drainage holes, out of the vehicle through water outlets (not shown) at a bottom surface of the vehicle.

Each of the engine vents 25, 26, 27, 28 is provided with a barrier means in the form of a lipped edge around its periphery: for example, as shown in Figure 6, the lower right engine vent 26 has a lipped edge 26a. The lipped edges, such as 26a, prevent water running into the respective engine vents 25, 26, 27, 28 from the water channels. The lipped edges 26a do not extend upwards to such an extent that they meet with the rear body 11 of the vehicle but a gap is provided therebetween so that air passing through the engine vents 25, 26, 27, 28 can flow over an upper side of the tray 23 and up through the outlet vents 21, 22.

The arrangement of the present invention provides an improved air vent arrangement for a vehicle having a mid- or rear-mounted engine, which incorporates an integrated water collection apparatus to ensure that water ingress into the engine is minimised without restricting the hot air flow out of the engine bay.

It will be appreciated that reference to the position of parts or components of the assembly with respect to the orientation of the vehicle, such as forward, rearward, front, rear, and back, refer to a vehicle orientated for normal forwards movement. Furthermore, reference to parts or components being upstream or downstream refers to the flow of air when the vehicle is moving in the normal forwards direction.

It will also be appreciated that the terms upstream and front are generally interchangeable, as are the terms downstream, rear, and back.

While reference is made generally to a vehicle, many components corresponding to a car are depicted and described. However, it should be appreciated that the above-described embodiments of the invention are applicable for use with any suitable vehicle, and only a car.

The above embodiments of the description are provided as examples of the invention only, and the invention is in no way limited to the above-described embodiments. Other alternative embodiments of the invention may be provided. The scope of the invention is only limited by the appended claims.

## Claims

1. A cooling system for an engine bay of vehicle (1) having a mid- or rear-mounted engine, the cooling system comprising an air inlet vent (25, 26, 27, 28) arranged to receive, in use, a flow of air heated by the engine;
an air outlet vent (21, 22) arranged to provide, in use, an outlet for the flow of air heated by the engine,
**characterised in that**:
the air outlet vent (21, 22) is arranged to be positioned further forwards, and higher, in the vehicle than the air inlet vent (25, 26, 27, 28) so that, in use, air flow from the air inlet vent (25, 26, 27, 28) to the air outlet vent (21, 22) is from a relatively rearward part of the vehicle to a relatively forward part of the vehicle, and
a water collection arrangement (23) arranged, in part, below the air outlet vent (21, 22) for collection of water entering the vehicle through the air outlet vent (21, 22), wherein the water collection arrangement (23) is fitted within the engine bay of the vehicle, and wherein the air inlet vents (25, 26, 27, 28) are formed in the water collection arrangement (23).

2. The vehicle according to claim 1, wherein the air outlet vent (21, 22) forms an integral part of a body of the vehicle.

3. The vehicle according to claim 1 or claim 2, wherein the air outlet vent (21, 22) is arranged on or proximate to a roof of the vehicle.

4. The vehicle according to any of claims 1 to 3, comprising a plurality of air inlet vents (25, 26 , 27, 28) and/or a plurality of air outlet vents (21, 22).

5. The vehicle according to claim 4, including an upper air inlet and a lower air inlet, the lower air inlet being arranged in a lower, and relatively rearward, position within the vehicle compared with the upper air inlet.

6. The vehicle according to any one of claims 1 to 5, wherein the water collection arrangement includes a water collection channel (123), a portion of the water collection channel being arranged below the air outlet vent for collecting water that has entered the air outlet assembly through the air outlet vent.

7. The vehicle according to claim 6, wherein the water collection arrangement includes a tray (23) to define the water collection channel (123).

8. The vehicle according to claim 7, wherein the air inlet vent (25, 26, 27, 28) is an aperture formed within the tray.

9. The vehicle according to claim 8, wherein a periphery of the aperture is provided with a lipped edge (26a) to prevent water entering the air inlet vent from the water collection channel.

10. The vehicle according to any one of claims 6 to 9, wherein the water collection channel (123) further comprises at least one drainage outlet (24) for water, and wherein the water collection channel is arranged to provide a flow path for water from the portion of the water collection channel below the air outlet vent to the outlet for water.

11. The vehicle according to claim 10, wherein the water collection channel (123) is sloped generally downwards from the portion of the channel arranged below the air outlet vent towards the drainage outlet (24).

12. The vehicle according to claim 11, wherein the water collection channel (123) includes a plurality of water flow paths between the air outlet vent (21, 22) and the drainage outlet (24).

13. The vehicle according to claim 12, wherein the plurality of water flow paths include left- and right-side flow water flow paths that run down side portions of the water collection arrangement.

14. The vehicle according to any one of claims 1 to 13, wherein the water collection arrangement includes an access opening (29) for access to a reservoir.

15. The vehicle according to claim 14, wherein a periphery of the access opening (29) is provided with a lipped edge (29a) to prevent water within the water collection arrangement from entering the access opening.

16. The vehicle according to any one of claims 1 to 15, wherein the air outlet vent (21, 22) has a cover means arranged to restrict the entry of solid material or debris into the engine bay, while allowing air to leave the outlet.

17. The vehicle according to claim 16, wherein the cover means is a mesh.

## Patentansprüche

1. Kühlsystem für den Motorraum eines Fahrzeugs (1) mit Mittel- oder Heckmotor, wobei das Kühlsystem einen Lufteinlass (25, 26, 27, 28) umfasst, der derart angeordnet ist, um einen Strom von durch den Motor aufgewärmter Luft zu empfangen;
und einen Luftauslass (21, 22) umfasst, angeordnet, um im Gebrauch einen Auslass für die von dem Motor erwärmte Luft bereitzustellen,
**dadurch gekennzeichnet, dass**:
der Luftauslass (21, 22) so angeordnet ist, dass er im Fahrzeug weiter nach vorn und höher als der Lufteinlass (25, 26, 27, 28) platziert werden kann, damit im Gebrauch der Luftstrom vom Lufteinlass (25, 26, 27, 28) zum Luftauslass (21, 22) von einem relativ weit hinten im Fahrzeug befindlichen zu einem relativ weit vorn befindlichen Teil des Fahrzeugs stattfindet, und
eine Wassersammelanordnung (23) teilweise unter dem Luftauslass (21, 22) zum Sammeln von Wasser angeordnet ist, das durch den Luftauslass (21, 22) in das Fahrzeug eindringt, wobei die Wassersammelanordnung (23) im Motorraum des Fahrzeugs angeordnet ist und wobei die Lufteinlässe (25, 26, 27, 28) in der Wassersammelanordnung (23) ausgebildet sind.

2. Fahrzeug nach Anspruch 1, wobei der Luftauslass (21, 22) einen wesentlichen Bestandteil einer Fahrzeugkarosserie darstellt.

3. Fahrzeug nach Anspruch 1 oder 2, wobei der Luftauslass (21, 22) auf dem oder in der Nähe des Fahrzeugdachs angeordnet ist.

4. Fahrzeug nach einem der Ansprüche 1 bis 3, umfassend mehrere Lufteinlässe (25, 26, 27, 28) und/oder mehrere Luftauslässe (21, 22).

5. Fahrzeug nach Anspruch 4, einschließlich eines oberen und eines unteren Lufteinlasses, wobei der untere Lufteinlass tiefer und weiter hinten im Fahrzeug angeordnet ist als der obere Lufteinlass.

6. Fahrzeug nach einem der Ansprüche 1 bis 5, wobei die Wassersammelanordnung eine Wassersammelleitung (123) umfasst, wobei ein Teil der Wassersammelleitung unter dem Luftauslass angeordnet ist, um Wasser zu sammeln, das durch den Luftauslass in die Luftauslassanordnung eingedrungen ist.

7. Fahrzeug nach Anspruch 6, wobei die Wassersammelanordnung eine Schale (23) enthält, die die Wassersammelleitung (123) definiert.

8. Fahrzeug nach Anspruch 7, wobei der Lufteinlass (25, 26, 27, 28) eine Öffnung in der Schale ist.

9. Fahrzeug nach Anspruch 8, wobei ein Umkreis der Öffnung mit einer Kantenlippe (26a) ausgestattet ist, um zu verhindern, dass Wasser aus der Wassersammelleitung in den Lufteinlass gelangt.

10. Fahrzeug nach einem der Ansprüche 6 bis 9, wobei die Wassersammelleitung (123) ferner wenigstens einen Ablauf (24) für Wasser umfasst und wobei die Wassersammelleitung so angeordnet ist, dass sie einen Strömungsweg von dem Abschnitt der Wassersammelleitung unter dem Luftauslass zum Ablauf für Wasser bereitstellt.

11. Fahrzeug nach Anspruch 10, wobei die Wassersammelleitung (123) von dem Abschnitt der Wassersammelleitung unter dem Luftauslass zum Ablauf (24) hin im Wesentlichen abschüssig angeordnet ist.

12. Fahrzeug nach Anspruch 11, wobei die Wassersammelleitung (123) mehrere Wasserströmungswege zwischen Luftauslass (21, 22) und Wasserablauf (24) enthält.

13. Fahrzeug nach Anspruch 12, wobei zu den mehreren Wasserströmungswegen solche Wasserströmungswege gehören, die auf der linken und auf der rechten Seite an seitlichen Elementen der Wassersammelanordnung entlang ablaufen.

14. Fahrzeug nach einem der Ansprüche 1 bis 13, wobei die Wassersammelanordnung eine Zugangsöffnung (29) für Zugang zu einem Behälter enthält.

15. Fahrzeug nach Anspruch 14, wobei ein Umkreis der Zugangsöffnung (29) mit einer Kantenlippe (29a) ausgestattet ist, um zu verhindern, dass Wasser in der Wassersammelanordnung in die Zugangsöffnung gelangt.

16. Fahrzeug nach einem der Ansprüche 1 bis 15, wobei der Luftauslass (21, 22) mit einem Abdeckungsmittel ausgestattet ist, um den Eintritt von Feststoffen oder von Schmutz in den Motorraum zu verhindern und gleichzeitig zuzulassen, dass Luft durch den Auslass austritt.

17. Fahrzeug nach Anspruch 16, wobei die Abdeckung ein Gitter ist.

## Revendications

1. Système de refroidissement pour un compartiment moteur de véhicule (1) ayant un moteur monté en position centrale ou arrière, le système de refroidissement comprenant un évent d'admission d'air (25, 26, 27, 28) agencé pour recevoir, en utilisation, un flux d'air chauffé par le moteur ;
un évent de refoulement d'air (21, 22) agencé pour fournir, en utilisation, un refoulement pour le flux d'air chauffé par le moteur,
**caractérisé en ce que** :
l'évent de refoulement d'air (21, 22) est agencé pour être positionné davantage vers l'avant, et plus haut, dans le véhicule que l'évent d'admission d'air (25, 26, 27, 28) de sorte que, en utilisation, un flux d'air de l'évent d'admission d'air (25, 26, 27, 28) à l'évent de refoulement d'air (21, 22) a lieu d'une partie relativement vers l'arrière du véhicule à une partie relativement vers l'avant du véhicule, et
un agencement de collecte d'eau (23) agencé, en partie, sous l'évent de refoulement d'air (21, 22) pour collecter l'eau entrant dans le véhicule par l'évent de refoulement d'air (21, 22), dans lequel l'agencement de collecte d'eau (23) est ajusté à l'intérieur du compartiment moteur du véhicule, et dans lequel les évents d'admission d'air (25, 26, 27, 28) sont formés dans l'agencement de collecte d'eau (23).

2. Véhicule selon la revendication 1, dans lequel l'évent de refoulement d'air (21, 22) forme une partie solidaire d'un corps du véhicule.

3. Véhicule selon la revendication 1 ou 2, dans lequel l'évent de refoulement d'air (21, 22) est agencé sur ou à proximité du toit du véhicule.

4. Véhicule selon l'une quelconque des revendications 1 à 3, comprenant une pluralité d'évents d'admission d'air (25, 26, 27, 28) et/ou une pluralité d'évents de refoulement d'air (21, 22).

5. Véhicule selon la revendication 4, comprenant une admission d'air supérieure et une admission d'air inférieure, l'admission d'air inférieure étant agencée dans une position plus basse, et relativement vers l'arrière, à l'intérieur du véhicule par rapport à l'admission d'air supérieure.

6. Véhicule selon l'une quelconque des revendications 1 à 5, dans lequel l'agencement de collecte d'eau comprend un canal collecteur d'eau (123), une partie du canal collecteur d'eau étant agencée sous l'évent de refoulement d'air pour collecter l'eau qui est entrée dans l'ensemble de refoulement d'air par l'évent de refoulement d'air.

7. Véhicule selon la revendication 6, dans lequel l'agencement de collecte d'eau comprend un plateau (23) destiné à définir le canal collecteur d'eau (123).

8. Véhicule selon la revendication 7, dans lequel l'évent d'admission d'air (25, 26, 27, 28) est une ouverture formée à l'intérieur du plateau.

9. Véhicule selon la revendication 8, dans lequel une périphérie de l'ouverture est dotée d'un bord à lèvre (26a) pour empêcher l'eau d'entrer dans l'évent d'admission d'air depuis le canal collecteur d'eau.

10. Véhicule selon l'une quelconque des revendications 6 à 9, dans lequel le canal collecteur d'eau (123) comprend au moins un refoulement de drainage (24) pour l'eau, et dans lequel le canal collecteur d'eau est agencé pour fournir une voie de passage pour l'eau de la partie du canal collecteur d'eau en dessous de l'évent de refoulement d'air au refoulement pour l'eau.

11. Véhicule selon la revendication 10, dans lequel le canal collecteur d'eau (123) est généralement incliné du bas de la partie du canal agencé en dessous de l'évent de refoulement d'air jusqu'au refoulement de drainage (24).

12. Véhicule selon la revendication 11, dans lequel le canal collecteur d'eau (123) comprend une pluralité de voies de passage d'eau entre l'évent de refoulement d'air (21, 22) et le refoulement de drainage (24).

13. Véhicule selon la revendication 12, dans lequel la pluralité de voies de passage d'eau comprend des voies de passage d'eau du flux côté droit ou côté gauche qui s'écoulent vers le bas le long de portions latérales de l'agencement de collecte d'eau.

14. Véhicule selon l'une quelconque des revendications 1 à 13, dans lequel l'agencement de collecte d'eau comprend une ouverture d'accès (29) pour accéder à un réservoir.

15. Véhicule selon la revendication 14, dans lequel une périphérie de l'ouverture d'accès (29) est dotée d'un bord à lèvre (29a) pour empêcher l'eau à l'intérieur de l'agencement de collecte d'eau d'entrer dans l'ouverture d'accès.

16. Véhicule selon l'une quelconque des revendications 1 à 15, dans lequel l'évent de refoulement d'air (21, 22) a un moyen de couverture agencé pour limiter l'entrée de matériau solide ou de débris dans le compartiment moteur, tout en permettant à l'air de quitter le refoulement.

17. Véhicule selon la revendication 16, dans lequel le moyen de couverture est grillagé.
